# EUROPÄISCHE PATENTSCHRIFT

(11) **EP 2 272 755 B1**
(45) Veröffentlichungstag und Bekanntmachung des Hinweises auf die Patenterteilung: **16.07.2014**
(21) Anmeldenummer: 10011569.0
(22) Anmeldetag: 18.08.2006
(51) Int. Cl.: B64D 11/06

(54) **Sitzbefestigungsvorrichtung**
Seat attachment device
Dispositif de fixation d'un siège

(30) Priorität: 01.12.2005 DE 102005057208
(43) Veröffentlichungstag der Anmeldung: 12.01.2011
(62) Teilanmeldung aus: 06017258.2
(73) Patentinhaber: Recaro Aircraft Seating GmbH & Co. KG, 74523 Schwäbisch Hall (DE)
(72) Erfinder: Mehujas, Marcel, 74523 Schwäbisch Hall (DE); Doll, Jürgen, 88079 Kressbronn (DE)
(74) Vertreter: Daub, Thomas

(56) Entgegenhaltungen:
- DE-A1- 3 447 178
- DE-A1- 19 812 490
- DE-U1-202004 015 211
- US-A- 3 344 749
- US-A- 3 523 669
- US-A- 3 605 637
- US-A- 4 771 969

## Beschreibung

### Stand der Technik

Es ist aus der US-Patentschrift 4 771 969 bereits eine Sitzbefestigungsvorrichtung zur Befestigung eines Sitzes an einem Boden eines Flugzeugs bekannt, die Horizontalbefestigungsmittel und Vertikalbefestigungsmittel aufweist. Bei der Montage werden zuerst die Vertikalbefestigungsmittel in Ausnehmungen einer Befestigungsschiene eingeführt. Anschließend wird die Sitzbefestigungsvorrichtung in Längsrichtung der Befestigungsschiene verschoben, so dass die Vertikalbefestigungsmittel unter Seitenflanken der Befestigungsschiene zum Liegen kommen und die Horizontalbefestigungsmittel in Längsrichtung der Befestigungsschiene formschlüssig in die Ausnehmungen der Befestigungsschiene eingeführt werden können. Anschließend werden mittels einer als Verriegelungseinheit ausgebildeten Betätigungseinheit der Sitzbefestigungsvorrichtung die Horizontalbefestigungsmittel in ihrer Vertikalrichtung formschlüssig verriegelt und die Vertikalbefestigungsmittel werden kraftschlüssig unter die Seitenflanken der Befestigungsschiene gespannt.

Der Erfindung liegt insbesondere die Aufgabe zugrunde, eine Sitzbefestigungsvorrichtung mit erhöhter Demontage- und/oder insbesondere mit erhöhter Montagesicherheit und/oder mit erhöhtem Demontage- und/oder Montagekomfort bereitzustellen. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Sitzbefestigungsvorrichtung, insbesondere zur Befestigung eines Flugzeugsitzes an einem Boden eines Flugzeugs, mit wenigstens einem Horizontalbefestigungsmittel und wenigstens einem Vertikalbefestigungsmittel sowie mit wenigstens einer Betätigungseinheit.

Es wird vorgeschlagen, dass wenigstens eine Funktion der Betätigungseinheit an zumindest einen Betriebsparameter gekoppelt ist. Unter einem "Horizontalbefestigungsmittel" soll insbesondere ein Befestigungsmittel verstanden werden, das zur Befestigung in wenigstens eine zumindest im Wesentlichen parallel zu einer aufgespannten Bodenauflageebene der Sitzbefestigungsvorrichtung bzw. - in einer Einbaulage betrachtet - zu einer Hauptbodenebene des Bodens, auf dem ein Sitz aufgeständert werden soll, ausgerichteten Richtung dient, während unter einem "Vertikalbefestigungsmittel" insbesondere ein Befestigungsmittel verstanden werden soll, das zur Befestigung in wenigstens eine zumindest im Wesentlichen senkrecht zur Bodenauflageebene der Sitzbefestigungsvorrichtung ausgerichteten Richtung dient. Unter einer "Betätigungseinheit" soll insbesondere eine Einheit verstanden werden, die von einem Bediener bei der Montage, Demontage, Wartung und/oder Einstellung der Sitzbefestigungsvorrichtung zu betätigen ist. Durch eine entsprechende Ausgestaltung können vorliegende Betriebsbedingungen berücksichtigt werden und es können eine erhöhte Demontage- und insbesondere Montagesicherheit und/oder ein erhöhter Demontage- und/oder Montagekomfort erreicht werden.

Erfindungsgemäß ist der Betriebsparameter zumindest abhängig von einer Positionsgröße eines der Horizontalbefestigungsmittel, wobei die Positionsgröße von einer Position wenigstens eines der Horizontalbefestigungsmittel gebildet ist.

So kann einfach sichergestellt werden, dass das Befestigungsmittel ordnungsgemäß positioniert ist, bevor eine Verriegelungsfunktion der Betätigungseinheit durchgeführt werden kann.

Der Betriebsparameter kann durch verschiedene, dem Fachmann als sinnvoll erscheinende Einheiten erfasst werden, wie über eine Einheit zur elektrischen, elektromagnetischen, optischen und/oder mechanischen Erfassung usw., wie beispielsweise über eine Laserabstandssensoreinheit, eine Kraftsensoreinheit usw. Mittels einer Einheit zur mechanischen Erfassung kann jedoch vorteilhaft eine Fremdenergiequelle vermieden werden und es kann eine besonders konstruktiv einfache und kostengünstige Erfassung erreicht werden.

In einer weiteren Ausgestaltung der Erfindung wird vorgeschlagen, dass die Betätigungseinheit als Verriegelungseinheit dient, wodurch insbesondere eine besonders sichere Verriegelung bzw. Befestigung erzielt werden kann.

Die Betätigungseinheit kann dabei zur kraftschlüssigen und/oder zur formschlüssigen verriegelung vorgesehen sein. Mit einem Formschluss können hohe Kräfte vorteilhaft sicher aufgenommen werden und mit einem Kraftschluss kann eine vorteilhafte Spielfreiheit erzielt werden. Dient die Betätigungseinheit sowohl zur Herstellung eines Kraftschlusses als auch zur Herstellung eines Formschlusses, können zusätzliche Bauteile, Bauraum und Gewicht eingespart werden.

Umfasst die Sitzbefestigungsvorrichtung wenigstens einen Rastmechanismus, der zur Positionierung zumindest eines Befestigungsmittels vorgesehen ist, können insbesondere zumindest einzelne Abläufe zumindest teilweise automatisiert werden bzw. kann ein vorteilhaftes selbsttätiges Bewegen eines Befestigungsmittels in eine vorbestimmte Stellung erreicht werden und der Komfort kann gesteigert werden.

Erfindungsgemäß weist die Sitzbefestigungsvorrichtung wenigstens eine Positionierhilfeeinheit mit einer Ausgabeeinheit auf.

Dabei soll unter einer "Ausgabeeinheit" insbesondere eine Einheit zur Ausgabe eines optischen, taktilen und/oder akustischen Signals verstanden werden, anhand dessen ein Bediener auf eine vorliegende Positionierung, insbesondere auf eine vorliegende ordnungsgemäße Positionierung, schließen kann. Durch eine entsprechende Ausgestaltung können wiederum insbesondere die Montagesicherheit und der Montagekomfort erhöht werden.

Bildet die Betätigungseinheit zumindest teilweise eine Sicherungseinheit zur Sicherung einer anderen Betätigungseinheit, kann ein unerwünschtes Verstellen der zu sichernden Betätigungseinheit vorteilhaft vermieden werden und die Demontage- und insbesondere Montagesicherheit können weiter erhöht werden.

Ferner wird vorgeschlagen, dass die Betätigungseinheit zumindest teilweise einstückig mit einer Signalausgabeeinheit ausgeführt ist, wodurch zusätzliche Bauteile, Gewicht, Bauraum und Montageaufwand eingespart und dennoch vorteilhaft entsprechende Signale an einen Bediener ausgegeben werden können, wie akustische, taktile und/oder insbesondere optische Signale.

Umfasst die zumindest teilweise eine Sicherungseinheit bildende Betätigungseinheit zumindest einen schwenkbar gelagerten Bügel, kann diese besonders konstruktiv einfach verwirklicht werden, insbesondere kann diese vorteilhaft einfach einstückig mit einer Signalausgabeeinheit, vorzugsweise mit einer optischen Signalausgabeeinheit, ausgeführt werden.

Eine erfindungsgemäße Sitzbefestigungsvorrichtung eignet sich besonders vorteilhaft zur Befestigung eines Flugzeugsitzes in einem Flugzeug, ist jedoch auch in anderen, dem Fachmann als sinnvoll erscheinenden Bereichen einsetzbar, wie beispielsweise im Bereich von Fahrzeugen, wie größeren Personenwagen, Reisebussen, Schiffsfähren, oder im Rahmen einer Saalbestuhlung, wie für eine Kongresshalle, einen Theatersaal, einen Kinosaal usw. Ferner lässt sich die Sitzbefestigungsvorrichtung auch zum Festzurren von Lasten, Gepäck oder sonstigem Transportgut von Flug- und Fahrzeugen jedweder Art verwenden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Sitzbefestigungsvorrichtung schräg von oben im montierten Zustand an einer Befestigungsschiene,
- Fig. 2: Einzelteile der Sitzbefestigungsvorrichtung aus Figur 1,
- Fig. 3: die Sitzbefestigungsvorrichtung aus Figur 1 in verriegeltem Zustand mit geschnitten dargestellter Befestigungsschiene,
- Fig. 4: die Sitzbefestigungsvorrichtung aus Figur 1 in entriegeltem Zustand mit geschnitten dargestellter Befestigungsschiene,
- Fig. 5: einen Längsschnitt durch die Sitzbefestigungsvorrichtung vor einem Verriegelungsvorgang,
- Fig. 6: die Sitzbefestigungsvorrichtung entsprechend Figur 5 bei einem Montagevorgang,
- Fig. 7: die Sitzbefestigungsvorrichtung entsprechend Figur 5 nach einem Verriegelungsvorgang im verriegelten Zustand,
- Fig. 8: einen Querschnitt durch die Sitzbefestigungsvorrichtung im verriegelten Zustand,
- Fig. 9: eine alternative Sitzbefestigungsvorrichtung schräg von oben im montierten Zustand an einer Befestigungsschiene,
- Fig. 10: einen Längsschnitt durch die Sitzbefestigungsvorrichtung aus Figur 9 in verriegeltem Zustand,
- Fig. 11: die Sitzbefestigungsvorrichtung aus Figur 9 bei einem Montagevorgang schräg von oben und
- Fig. 12: die Sitzbefestigungsvorrichtung beim Montagevorgang in einem gegenüber Figur 11 nachfolgenden Montagestadium.

### Beschreibung der Ausführungsbeispiele

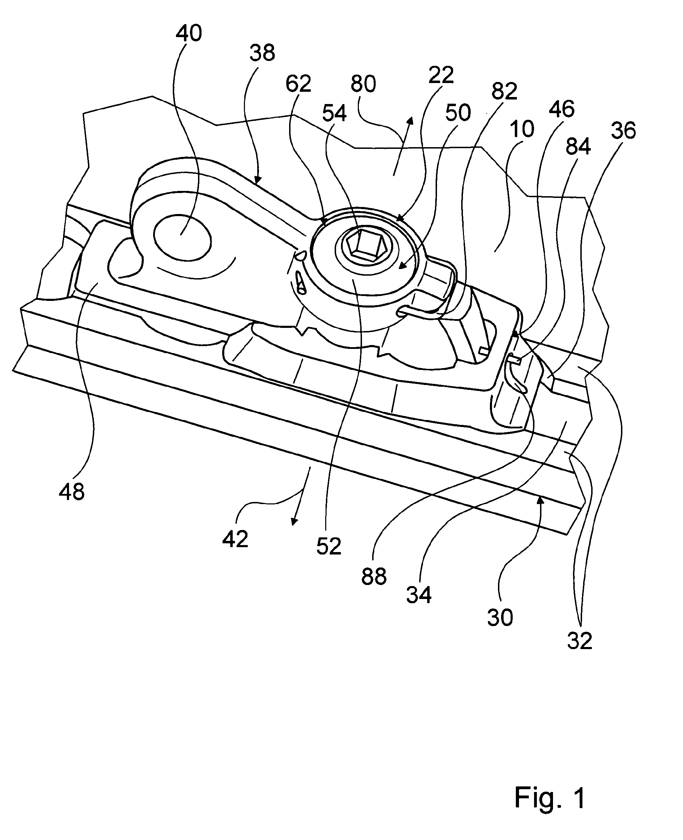

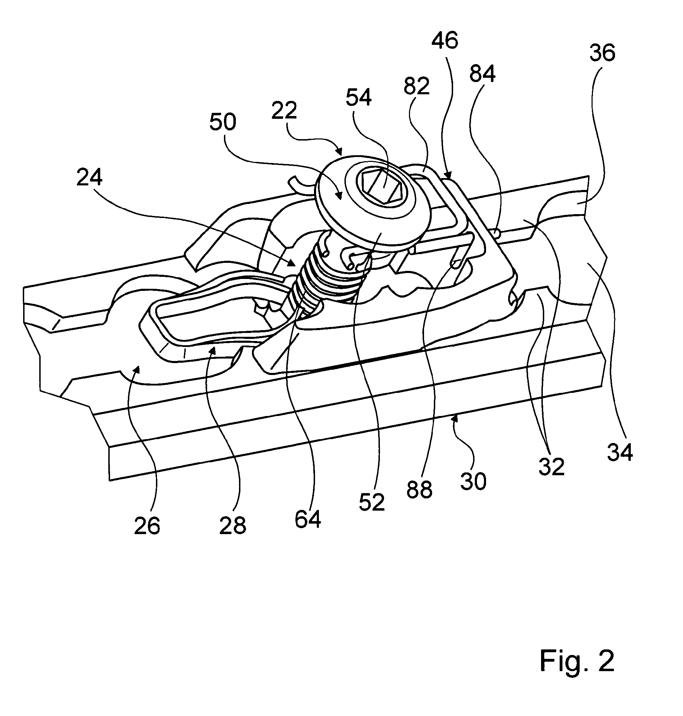

Figur 1 zeigt eine Sitzbefestigungsvorrichtung zur Befestigung eines Flugzeugsitzes an einem Boden 10 bzw. einem Kabinenboden eines Flugzeugs, und zwar an in Längsrichtung des Flugzeugs verlaufenden, an dem Kabinenboden befestigten und parallel zu demselben ausgerichteten Befestigungsschienen 30. Die Befestigungsschienen 30 schließen mit ihrer Oberseite bündig mit dem Boden 10 bzw. dem Kabinenboden des Flugzeugs ab. Die Befestigungsschiene 30 wird von einem Hohlprofil gebildet, das an seiner Oberseite mit einander zugewandten Profilflanken 32 einen Längskanal 34 begrenzt. Der Längskanal 34 weist in einem vorgegebenen Maß seinen freien Eintrittsquerschnitt verbreiternde Durchtrittsöffnungen 36 auf, die voneinander einen gleichmäßigen Abstand aufweisen und bohrungsartig ausgeführt sind (Figuren 1 bis 4).

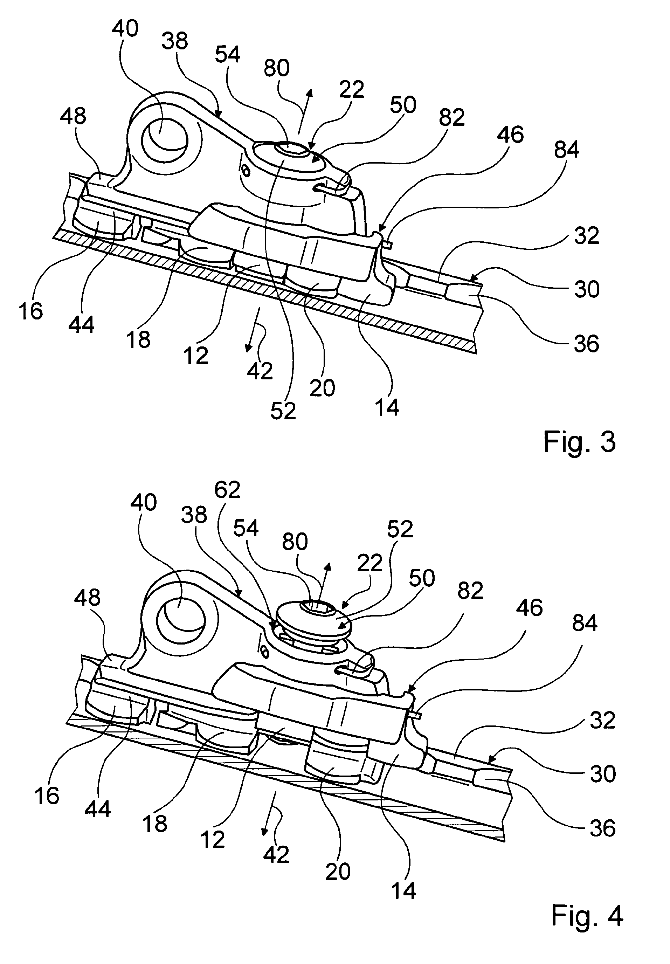

Die Sitzbefestigungsvorrichtung weist einen Grundkörper 38 mit einem angeformten Lagerauge 40 zum Befestigen eines Sitzfußes auf, und zwar zur Befestigung eines hinteren Sitzfußes. Der Grundkörper 38 weist eine einstückig angeformte Deckplatte 48 auf, an deren dem Lagerauge 40 abgewandter Seite ein senkrecht auf der Deckplatte 48 stehender Steg 44 mit drei Vertikalbefestigungsmitteln 16, 18, 20 einstückig angeformt ist (Figuren 3 und 4). Die Vertikalbefestigungsmittel 16, 18, 20 weisen quer zur Längserstreckung des Grundkörpers 38 beidseitig abstehende kreissegmentförmige Ausformungen auf.

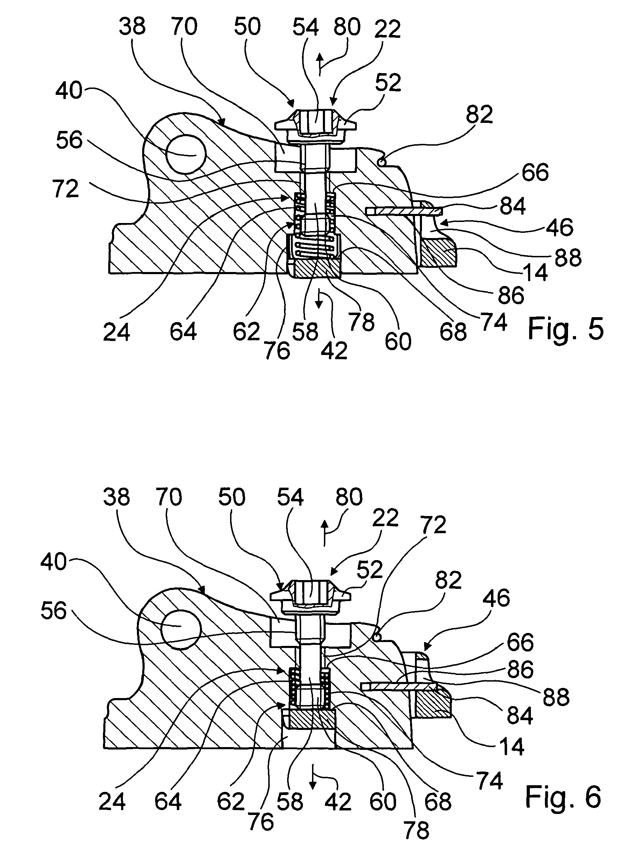

Zudem weist die Sitzbefestigungsvorrichtung ein im Wesentlichen senkrecht zur Deckplatte 48 des Grundkörpers 38 relativ zu demselben bewegbar gelagertes und in Längsrichtung des Grundkörpers 38 parallel zur Deckplatte 48 relativ zum Grundkörper 38 fixiertes Schiebeteil 46 auf. Am Schiebeteil 46 sind zwei Horizontalbefestigungsmittel 12, 14 einstückig angeformt, die im Wesentlichen in ihrer Form den Durchtrittsöffnungen 36 entsprechen. Das Schiebeteil 46 und der Grundkörper 38 sind in Längsrichtung des Grundkörpers 38 an einem dem Lagerauge 40 abgewandten Ende des Grundkörpers 38 über einen Stift 84 verliersicher verbunden (Figuren 5 bis 8), der in einer Bohrung 86 des Grundkörpers 38 fixiert ist und in ein Langloch 88 des Schiebeteils 46 hineinragt.

Ferner weist die Sitzbefestigungsvorrichtung eine als Verriegelungs- und Entriegelungseinheit dienende Betätigungseinheit 22 mit einer Verriegelungsschraube 50 auf. Die Verriegelungsschraube 50 weist einen Schraubenkopf 52 mit einem Innensechskant 54 auf. An den Schraubenkopf 52 schließt sich ein erstes Bolzenteil 56 der Verriegelungsschraube 50 mit einem Außengewinde an, das in ein zweites Bolzenteil 58 ohne Gewinde übergeht. Das zweite Bolzenteil 58 weist einen Außendurchmesser auf, der einem Kerndurchmesser des ersten Bolzenteils 56 entspricht. Das zweite Bolzenteil 58 geht in ein drittes Bolzenteil 60 mit einem Außengewinde über, das bis auf die Länge dem Gewinde des ersten Bolzenteils 56 entspricht.

Die Verriegelungsschraube 50 ragt im Wesentlichen senkrecht zur Längsrichtung, von einer Deckseite des Grundkörpers 38 in Richtung 42 einer Unterseite des Grundkörpers 38 in eine Ausnehmung 62 desselben hinein (Figuren 5 bis 8). In der Ausnehmung 62 ist zudem eine vorgespannte Schraubendruckfeder 64 eines Rastmechanismus 24 der Betätigungseinheit 22 angeordnet, die mit ihrem der Deckseite des Grundkörpers 38 zugewandten Ende an einer Auflagefläche 66 des Grundkörpers 38 und mit ihrem der Deckseite des Grundkörpers 38 abgewandten Ende an einer Auflagefläche 68 des Schiebeteils 46 abgestützt ist. Die Ausnehmung 62 weist im Bereich der Deckseite des Grundkörpers 38 einen Schraubenkopfaufnahmebereich 70 auf, der von seinem Durchmesser und seiner Tiefe im Wesentlichen an den Schraubenkopf 52 angepasst ist, so dass dieser in dem Schraubenkopfaufnahmebereich 70 nahezu vollständig versenkt werden kann. Zwischen dem Schraubenkopfaufnahmebereich 70 und der Auflagefläche 66 weist die Ausnehmung 62 einen Gewindebereich 72 mit einem Innengewinde auf. An den Gewindebereich 72 schließt sich in Richtung der Unterseite des Grundkörpers 38 ein Federaufnahmebereich 74 der Ausnehmung 62 mit einem im Vergleich zum Gewindebereich 72 größeren Durchmesser an. Im Bereich der Unterseite des Grundkörpers 38 weist die Ausnehmung 62 zudem einen Aufnahmebereich 76 zur Aufnahme eines Stegs 78 des Schiebeteils 46 auf.

Vor der Montage der Sitzbefestigungsvorrichtung ist die Verriegelungsschraube 50 mit ihrem am ersten Bolzenteil 56 vorgesehenen Außengewinde aus dem Innengewinde im Gewindebereich 72 in die von der Unterseite des Grundkörpers 38 abgewandte Richtung herausgeschraubt (Figur 5). Das am dritten Bolzenteil 60 vorgesehene Gewindeteil dient als Verliersicherung der Verriegelungsschraube 50 und befindet sich vor der Montage im Federaufnahmebereich 74.

Bei der Montage der Sitzbefestigungsvorrichtung werden die Vertikalbefestigungsmittel 16, 18, 20 durch die Durchtrittsöffnungen 36 geführt. Dabei kommen die Horizontalbefestigungsmittel 12, 14 mit der Oberseite der Befestigungsschiene 30 in Anlage und das Schiebeteil 46 wird gemeinsam mit den Horizontalbefestigungsmitteln 12, 14 in eine von der Unterseite des Grundkörpers 38 abgewandte Richtung 80 verschoben (Figuren 4 und 6). Bei der Bewegung des Schiebeteils 46 kommt dasselbe mit der Verriegelungsschraube 50 in Kontakt und verschiebt diese weiter aus der Ausnehmung 62 heraus, so dass das Gewinde des ersten Bolzenteils 56 und das Innengewinde im Gewindebereich 72 beabstandet angeordnet sind (Figuren 5 und 6).

Eine Verriegelungsfunktion der Betätigungseinheit 22 ist an die Position des Schiebeteils 46 und damit an die Positionen der Horizontalbefestigungsmittel 12, 14 gekoppelt, und zwar kann eine Verriegelung mittels der Verriegelungsschraube 50 erst durchgeführt werden, wenn das Schiebeteil 46 und damit die Horizontalbefestigungsmittel 12, 14 in ihrer der Deckseite des Grundkörpers 38 abgewandten Endstellung angeordnet sind, wie dies in den Figuren 3, 7 und 8 dargestellt ist. Befindet sich das Schiebeteil 46 in seiner der Deckseite des Grundkörpers 38 zugewandten Endstellung, wird die Verriegelungsschraube 50 durch das Schiebeteil 46 in Richtung zur Unterseite des Grundkörpers 38 gesperrt, so dass eine Kopplung des Gewindes des ersten Bolzenteils 56 der Verriegelungsschraube 50 mit dem Innengewinde im Gewindebereich 72 der Ausnehmung 62 bzw. des Grundkörpers 38 und damit ein eine Verriegelung bewirkendes Einschrauben der Verriegelungsschraube 50 in den Grundkörper 38 verhindert ist.

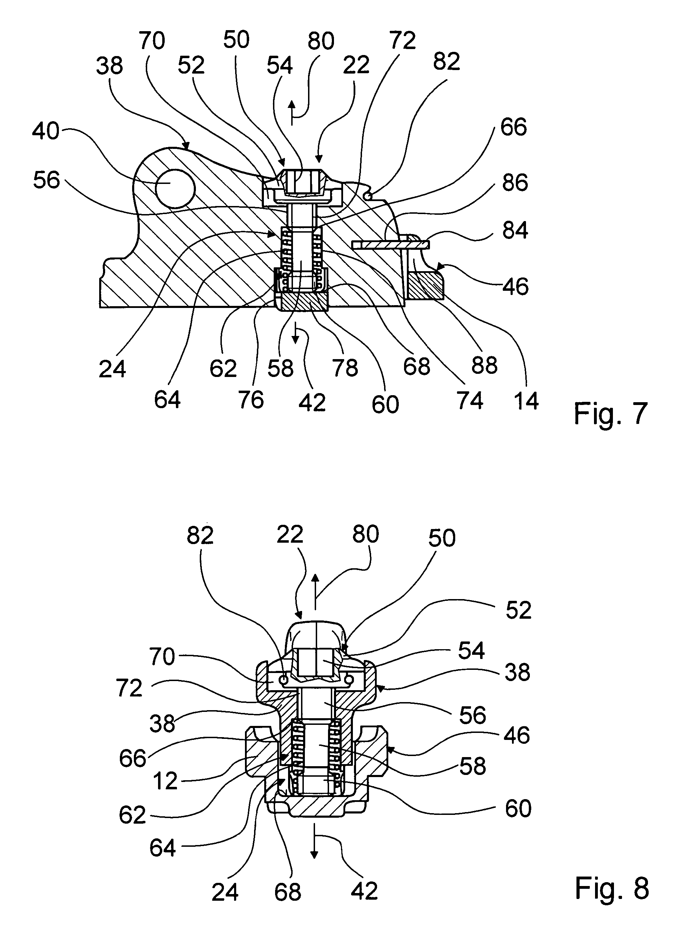

Um eine Verriegelung zu ermöglichen, muss die Sitzbefestigungsvorrichtung entlang der Befestigungsschiene 30 verschoben werden, bis die Horizontalbefestigungsmittel 12, 14 jeweils im Bereich der Durchtrittsöffnungen 36 zum Liegen kommen und, angetrieben durch die Schraubendruckfeder 64 des Rastmechanismus 24, in die Durchtrittsöffnungen 36 einrasten (Figur 7). Die Lage des Schiebeteils 46 und damit der Horizontalbefestigungsmittel 12, 14 wird damit mechanisch erfasst und als Betriebsparameter genutzt. Um für einen Bediener eine ordnungsgemäße Positionierung der Sitzbefestigungsvorrichtung in Längsrichtung der Befestigungsschiene 30 noch weiter zu vereinfachen, ist zudem eine Positionierhilfeeinheit 26 mit einer von einer Blechfeder gebildeten Ausgabeeinheit 28 vorgesehen. Ist die ordnungsgemäße Position in Längsrichtung der Befestigungsschiene 30 erreicht, rastet die Blechfeder mit einem angeformten bauchigen Bereich in eine Durchtrittsöffnung 36 ein und signalisiert einem Bediener taktil und insbesondere akustisch, dass die ordnungsgemäße Position erreicht ist. Die Blechfeder könnte auch mit einem Sichtfenster und einer Markierung zusammenwirken, so dass einem Bediener ein optisches Signal ausgegeben werden kann, an dem der Bediener erkennt, ob die Sitzbefestigungsvorrichtung in einer ordnungsgemäßen Position ist.

Sind die Horizontalbefestigungsmittel 12, 14 in die Durchtrittsöffnungen 36 eingerastet, kann die Verriegelungsschraube 50 mit dem Gewinde des ersten Bolzenteils 56 in das Innengewinde im Gewindebereich 72 eingeschraubt werden, wodurch die Horizontalbefestigungsmittel 12, 14 formschlüssig in ihrer Verriegelungsstellung gesichert werden (Figuren 3, 7 und 8). Ferner ist die Betätigungseinheit 22 zur kraftschlüssigen Verriegelung vorgesehen, und zwar wird bei der Montage mittels der Verriegelungsschraube 50 das Schiebeteil 46 im Bereich der Ausnehmung 62 nach unten belastet und damit die Schraubendruckfeder 64 in ihrer Spannkraft unterstützt. Durch die Belastung werden die Horizontalbefestigungsmittel 12, 14 gegen ein Bodenteil der Befestigungsschiene 30 und die Vertikalbefestigungsmittel 16, 18, 20, die durch das Verschieben der Sitzbefestigungsvorrichtung in Längsrichtung der Befestigungsschiene 30 zwischen den Durchtrittsöffnungen 36 zum Liegen gekommen sind, von unten an die Profilflanken 32 der Befestigungsschiene 30 gedrückt. Mittels der kraftschlüssigen Verriegelung werden vorteilhaft eine Spielfreiheit und ein Vibrationsschutz erreicht. Alternativ könnte die Betätigungseinheit 22 jedoch auch nur zur formschlüssigen Verriegelung vorgesehen sein.

Um zu vermeiden, dass sich die Verriegelungsschraube 50 aus ihrer Verriegelungsstellung selbsttätig löst, ist zudem eine Sicherungseinheit mit einer Bügelfeder 82 vorgesehen, die in der Verriegelungsstellung der Verriegelungsschraube 50 in an dieselbe angeformte Abflachungen einrastet und als Verdrehsicherung dient.

Zur Demontage wird die Verriegelungsschraube 50 mit dem Gewinde des ersten Bolzenteils 56 wieder aus dem Innengewinde im Gewindebereich 72 herausgeschraubt. Anschließend wird das Schiebeteil 46 vom Bediener manuell von der Oberseite der Befestigungsschiene 30 abgehoben, um anschließend die Sitzbefestigungsvorrichtung in Längsrichtung der Befestigungsschiene 30 verschieben und aus dieser entnehmen zu können.

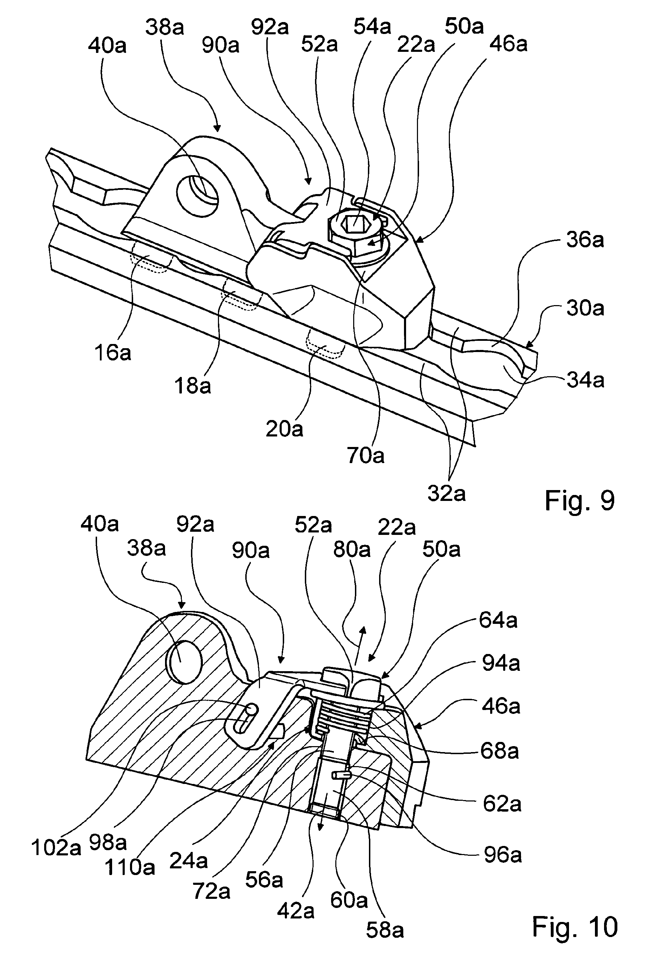

In den Figuren 9 bis 12 ist eine alternative Sitzbefestigungsvorrichtung dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele ist jedoch den Bezugszeichen des Ausführungsbeispiels in den Figuren 9 bis 12 der Buchstabe a hinzugefügt. Die nachfolgende Beschreibung beschränkt sich im Wesentlichen auf die Unterschiede zu dem Ausführungsbeispiel in den Figuren 1 bis 8, wobei bezüglich gleich bleibender Bauteile, Merkmale und Funktionen auf die Beschreibung zum Ausführungsbeispiel in den Figuren 1 bis 8 verwiesen werden kann.

Die Sitzbefestigungsvorrichtung weist eine als Verriegelungs- und Entriegelungseinheit dienende Betätigungseinheit 22a mit einer Verriegelungsschraube 50a auf.

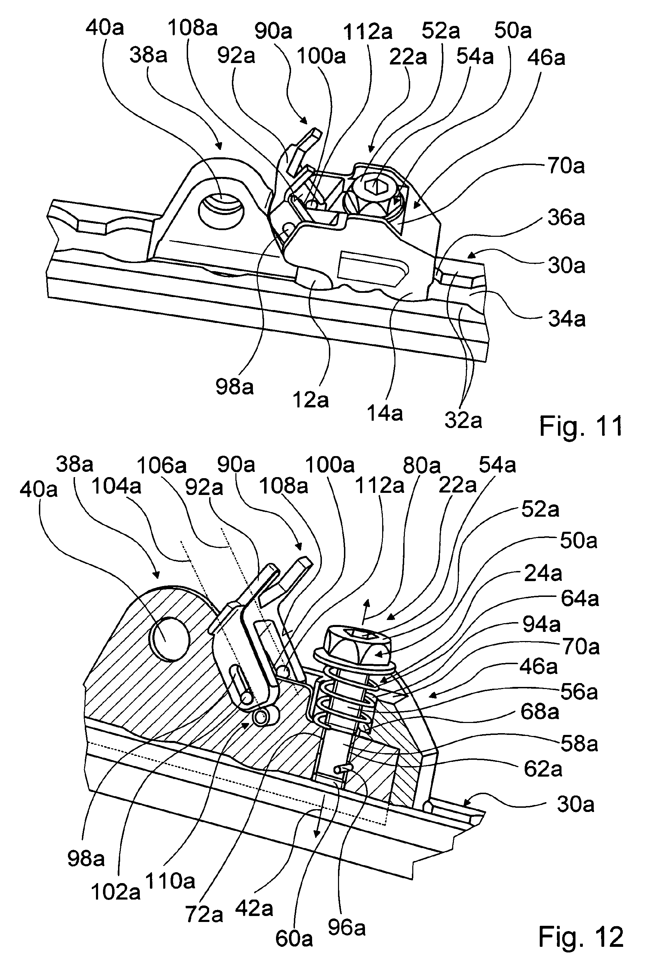

Die Verriegelungsschraube 50a ragt im Wesentlichen senkrecht zur Längsrichtung, von einer Deckseite eines Schiebeteils 46a und eines Grundkörpers 38a in Richtung 42a einer Unterseite des Grundkörpers 38a in Ausnehmungen 62a, 94a des Schiebeteils 46a und des Grundkörpers 38a hinein (Figuren 10 und 12).

In der Ausnehmung 94a des Schiebeteils 46a ist zudem eine vorgespannte Schraubendruckfeder 64a eines Rastmechanismus 24a der Betätigungseinheit 22a angeordnet, die mit ihrem - in einer Einbaulage betrachtet - oberen Ende an einem Schraubenkopf 52a der Verriegelungsschraube 50a und mit ihrem unteren Ende an einer von einem radial nach innen weisenden, ringscheibenförmigen Fortsatz des Schiebeteils 46a gebildeten Auflagefläche 68a abgestützt ist. Die Ausnehmung 94a des Schiebeteils 46a oberhalb der Auflagefläche 68a ist von ihrem Durchmesser und ihrer Tiefe im Wesentlichen an den Schraubenkopf 52a angepasst, so dass dieser darin nahezu vollständig versenkt werden kann. Die Ausnehmung 62a des Grundkörpers 38a weist ausgehend von ihrem - in der Einbaulage betrachtet - oberen, dem Schiebeteil 46a zugewandten Ende im ersten Drittel ihrer Länge einen Gewindebereich 72a mit einem Innengewinde auf. An den Gewindebereich 72a schließt sich in Richtung der Unterseite des Grundkörpers 38a ein gewindefreier Bereich mit einem im Vergleich zum Gewindebereich 72a größeren Durchmesser an.

Vor der Montage der Sitzbefestigungsvorrichtung ist die Verriegelungsschraube 50a mit ihrem an einem ersten Bolzenteil 56a vorgesehenen Außengewinde aus dem Innengewinde des Gewindebereichs 72a in die von der Unterseite des Grundkörpers 38a abgewandte Richtung herausgeschraubt (Figur 12). Zur Verliersicherung ist in den Grundkörper 38a nach der Montage der Verriegelungsschraube 50a ein Querstift 96a eingeschoben, der in die Ausnehmung 62a ragt, so dass ein Gewindeteil an einem dritten Bolzenteil 60a der Verriegelungsschraube 50a auf der der Unterseite des Grundkörpers 38a zugewandten Seite gesichert ist und ein versehentliches Herausschrauben der Verriegelungsschraube 50a sicher vermieden werden kann.

Bei der Montage der Sitzbefestigungsvorrichtung werden an den Grundkörper 38a angeformte Vertikalbefestigungsmittel 16a, 18a, 20a durch Durchtrittsöffnungen 36a einer Befestigungsschiene 30a geführt. Dabei kommen an das Schiebeteil 46a angeformte Horizontalbefestigungsmittel 12a, 14a mit der Oberseite der Befestigungsschiene 30a in Anlage und das Schiebeteil 46a wird gemeinsam mit den Horizontalbefestigungsmitteln 12a, 14a in eine von der Unterseite des Grundkörpers 38a abgewandte Richtung 80a verschoben (Figur 11).

Eine Verriegelungsfunktion der Betätigungseinheit 22a ist an die Position des Schiebeteils 46a und damit an die Positionen der Horizontalbefestigungsmittel 12a, 14a gekoppelt, und zwar kann eine Verriegelung mittels der Verriegelungsschraube 50a erst durchgeführt werden, wenn das Schiebeteil 46a und damit die Horizontalbefestigungsmittel 12a, 14a in einer der Unterseite des Grundkörpers 38a zugewandten, bei der Montage einer der Befestigungsschiene 30a zugewandten Endstellung angeordnet sind, wie dies in den Figuren 10 und 12 dargestellt ist. Befindet sich das Schiebeteil 46a in einer der Unterseite des Grundkörpers 38a abgewandten Endstellung, wird die Verriegelungsschraube 50a durch die Schraubendruckfeder 64a und das Schiebeteil 46a in Richtung zur Unterseite des Grundkörpers 38a gesperrt, so dass eine Kopplung des Gewindes des ersten Bolzenteils 56a der Verriegelungsschraube 50a mit dem Innengewinde im Gewindebereich 72a der Ausnehmung 62a bzw. des Grundkörpers 38a und damit ein eine Verriegelung bewirkendes Einschrauben der Verriegelungsschraube 50a in den Grundkörper 38a verhindert ist. Bei einem Versuch, die Verriegelungsschraube 50a einzuschrauben, läuft die Schraubendruckfeder 64a auf Block, bevor die Verriegelungsschraube 50a in den Gewindebereich 72a der Ausnehmung 62a eingeschraubt werden kann.

Um eine Verriegelung zu ermöglichen, muss die Sitzbefestigungsvorrichtung entlang der Befestigungsschiene 30a verschoben werden, bis die Horizontalbefestigungsmittel 12a, 14a jeweils im Bereich der Durchtrittsöffnungen 36a zum Liegen kommen und, angetrieben durch die Schraubendruckfeder 64a des Rastmechanismus 24a, in die Durchtrittsöffnungen 36a einrasten (Figur 12). Die Lage des Schiebeteils 46a und damit der Horizontalbefestigungsmittel 12a, 14a wird damit mechanisch erfasst und als Betriebsparameter genutzt. Bereits bevor die Verriegelungsschraube 50a in das Innengewinde des Gewindebereichs 72a eingeschraubt ist, sind die Horizontalbefestigungsmittel 12a, 14a durch eine Federkraft der Schraubendruckfeder 64a in ihrer Verriegelungsstellung gesichert. Sind die Horizontalbefestigungsmittel 12a, 14a in die Durchtrittsöffnungen 36a eingerastet, kann die Verriegelungsschraube 50a mit dem Gewinde des ersten Bolzenteils 56a in das Innengewinde im Gewindebereich 72a eingeschraubt werden, wodurch die Horizontalbefestigungsmittel 12a, 14a formschlüssig in ihrer Verriegelungsstellung gesichert werden (Figur 10). Ferner ist die Betätigungseinheit 22a zur kraftschlüssigen Verriegelung vorgesehen, und zwar werden bei der Montage mittels der Verriegelungsschraube 50a der Grundkörper 38a und die Vertikalbefestigungsmittel 16a, 18a, 20a, die durch das Verschieben der Sitzbefestigungsvorrichtung in Längsrichtung der Befestigungsschiene 30a zwischen den Durchtrittsöffnungen 36a zum Liegen gekommen sind, von unten an Profilflanken 32a der Befestigungsschiene 30a gedrückt. Mittels der kraftschlüssigen Verriegelung werden vorteilhaft eine Spielfreiheit und ein Vibrationsschutz erreicht.

Um zu vermeiden, dass sich die Verriegelungsschraube 50a aus ihrer Verriegelungsstellung selbsttätig löst, ist zudem eine eine Sicherungseinheit bildende Betätigungseinheit 90a vorgesehen. Eine Sicherungsfunktion der Betätigungseinheit 90a ist ebenfalls an die Position des Schiebeteils 46a und damit an die Positionen der Horizontalbefestigungsmittel 12a, 14a gekoppelt, und zwar kann ein schwenkbar gelagerter Sicherungsbügel 92a der Betätigungseinheit 90a von seiner Freigabestellung (Figuren 11 und 12), in der der Sicherungsbügel 92a in seine der Verriegelungsschraube 50a abgewandte Endstellung geschwenkt ist, nur in seine die Verriegelungsschraube 50a in ihrer Drehstellung sichernde bzw. verriegelnde, der Verriegelungsschraube 50a zugewandte Endstellung geschwenkt werden, wenn das Schiebeteil 46a in seine der Unterseite des Grundkörpers 38a zugewandte Endstellung verschoben ist. Der Sicherungsbügel 92a weist in Seitenschenkel eingebrachte Langlöcher 98a, 100a auf, über die derselbe auf einer im Grundkörper 38a befestigten Achse 102a schwenkbar gelagert ist. Die Langlöcher 98a, 100a sind dabei bezogen auf Längsmittelachsen 104a, 106a der Schenkel, in der der Verriegelungsschraube 50a abgewandten, oberen Endstellung des Sicherungsbügels 92a betrachtet (Figuren 11 und 12), außermittig auf der der Verriegelungsschraube 50a abgewandten Seite angeordnet. Wird bei der Montage das Schiebeteil 46a in die von der Unterseite des Grundkörpers 38a abgewandte Richtung verschoben, kommt dabei das Schiebeteil 46a mit dem Sicherungsbügel 92a, und zwar, in der oberen Endstellung des Sicherungsbügels 92a betrachtet, mit der Verriegelungsschraube 50a zugewandten Bereichen der Schenkel des Sicherungsbügels 92a in Anlage und verschiebt diesen in seine der Unterseite des Grundkörpers 38a abgewandte, obere Endstellung (Figur 11). In dieser Endstellung wird der Sicherungsbügel 92a durch das Schiebeteil 46a in seiner Schwenkbewegung in Richtung der Verriegelungsschraube 50a blockiert, so dass dieser nicht in Richtung der Verriegelungsschraube 50a zur Verriegelung bzw. zur Sicherung derselben geschwenkt werden kann.

Die Betätigungseinheit 90a ist zudem einstückig mit einer optischen Signalausgabeeinheit ausgeführt. Der Sicherungsbügel 92a weist auf seiner - in der der Verriegelungsschraube 50a abgewandten Endstellung betrachtet - der Verriegelungsschraube 50a zugewandten Unterseite ein farbiges, insbesondere rotes Signalmittel 108a auf, das einem Bediener signalisiert, dass die Sitzbefestigungsvorrichtung noch nicht ordnungsgemäß montiert bzw. verriegelt ist.

Erst wenn das Schiebeteil 46a in seine der Unterseite des Grundkörpers 38a zugewandte Endstellung eingerastet ist und die Verriegelungsschraube 50a in den Grundkörper 38a zur Verriegelung eingeschraubt ist, kann der Sicherungsbügel 92a in seine der Verriegelungsschraube 50a zugewandte Endstellung geschwenkt werden, in der das Signalmittel 108 vollständig verdeckt ist (Figuren 9 und 10). Um den Sicherungsbügel 92a in seiner der Verriegelungsschraube 50a zugewandten Endstellung zu sichern, sind am Grundkörper 38a Kugeldruckstücke 110 angeordnet, die in der der Verriegelungsschraube 50a zugewandten Endstellung des Sicherungsbügels 92a in an Innenseiten der Schenkel des Sicherungsbügels 92a angeordnete Vertiefungen 112a einrasten (Figuren 10 und 12).

Zur Demontage wird die Verriegelungsschraube 50a mit dem Gewinde des ersten Bolzenteils 56a wieder aus dem Innengewinde im Gewindebereich 72a herausgeschraubt. Der Sicherungsbügel 92a wird in seine der Verriegelungsschraube 50a abgewandte Endstellung geschwenkt und anschließend wird das Schiebeteil 46a vom Bediener manuell von der Oberseite der Befestigungsschiene 30a abgehoben, um anschließend die Sitzbefestigungsvorrichtung in Längsrichtung der Befestigungsschiene 30a verschieben und aus dieser entnehmen zu können.

**Bezugszeichen**

| | | | |
|---|---|---|---|
| 10 | Boden | 52 | Schraubenkopf |
| 12 | Horizontalbefestigungsmittel | 54 | Innensechskant |
| | | 56 | Bolzenteil |
| 14 | Horizontalbefestigungsmittel | 58 | Bolzenteil |
| | | 60 | Bolzenteil |
| 16 | Vertikalbefestigungsmittel | 62 | Ausnehmung |
| | | 64 | Schraubendruckfeder |
| 18 | Vertikalbefestigungsmittel | 66 | Auflagefläche |
| | | 68 | Auflagefläche |
| 20 | Vertikalbefestigungsmittel | 70 | Schraubenkopfaufnahmebereich |
| 22 | Betätigungseinheit | 72 | Gewindebereich |
| 24 | Rastmechanismus | 74 | Federaufnahmebereich |
| 26 | Positionierhilfeeinheit | 76 | Aufnahmebereich |
| 28 | Ausgabeeinheit | 78 | Steg |
| 30 | Befestigungsschiene | 80 | Richtung |
| 32 | Profilflanke | 82 | Bügelfeder |
| 34 | Längskanal | 84 | Stift |
| 36 | Durchtrittsöffnung | 86 | Bohrung |
| 38 | Grundkörper | 88 | Langloch |
| 40 | Lagerauge | 90 | Betätigungseinheit |
| 42 | Richtung | 92 | Sicherungsbügel |
| 44 | Steg | 94 | Ausnehmung |
| 46 | Schiebeteil | 96 | Querstift |
| 48 | Deckplatte | 98 | Langloch |
| 50 | Verriegelungsschraube | 100 | Langloch |
| 102 | Achse | | |
| 104 | Längsmittelachse | | |
| 106 | Längsmittelachse | | |
| 108 | Signalmittel | | |
| 110 | Kugeldruckstücke | | |
| 112 | Vertiefung | | |

## Patentansprüche

1. Sitzbefestigungsvorrichtung, die zur Befestigung eines Sitzes oder zum Festzurren von Lasten an einer an einem Boden (10) befestigten Befestigungsschiene (30; 30a), die Durchtrittsöffnungen (36; 36a) aufweist, vorgesehen ist und die einen Grundkörper (38; 38a) mit einem angeformten Lagerauge zum Befestigen eines Sitzfußes, wenigstens ein Horizontalbefestigungsmittel (12, 14; 12a, 14a), wenigstens ein Vertikalbefestigungsmittel (16, 18, 20; 16a, 18a, 20a), wenigstens eine Betätigungseinheit (22; 22a, 90a) mit einer Verriegelungsschraube (50; 50a) sowie wenigstens eine Positionierhilfeeinheit (26) mit einer Ausgabeeinheit (28) umfasst, die, sind die Horizontalbefestigungsmittel (12, 14; 12a, 14a) in die Durchtrittsöffnungen (36; 36a) eingerastet, zur Ausgabe eines Signals als Hinweis für einen Bediener auf eine vorliegende ordnungsgemäße Positionierung des zumindest einen Horizontalbefestigungsmittels (12, 14; 12a, 14a) vorgesehen ist, wobei die Funktion der Betätigungseinheit (22; 22a, 90a) an zumindest einen Betriebsparameter gekoppelt ist, der zumindest abhängig von einer Positionsgröße eines der Horizontalbefestigungsmittel (12, 14; 12a, 14a) ist, wobei die Positionsgröße von einer Position wenigstens eines der Horizontalbefestigungsmittel (12, 14; 12a, 14a) gebildet ist, und wobei die Verriegelungsschraube (50; 50a) bei Positionierung der Sitzbefestigungsvorrichtung in der Befestigungsschiene (30; 30a) nur bei in die Durchtrittsöffnungen (36; 36a) eingerasteten Horizontalbefestigungsmittel (12, 14; 12a, 14a) mit ihrem Gewinde in ein Innengewinde eines G ewindebereichs (72; 72a) des Grundkörpers (38; 38a) einschraubbar ist, wodurch die Horizontalbefestigungsmittel (12, 14; 12a, 14a) formschlüssig in ihrer Verriegelungsstellung gesichert werden.

2. Sitzbefestigungsvorrichtung nach Anspruch 1,
**dadurch gekennzeichnet,**
**dass** die Ausgabeeinheit (28) von einer Blechfeder gebildet ist.

3. Sitzbefestigungsvorrichtung nach einem der vorhergehenden Ansprüche,
**dadurch gekennzeichnet,**
**dass** die Betätigungseinheit (22; 22a, 90a) als Verriegelungseinheit dient.

4. Sitzbefestigungsvorrichtung nach Anspruch 3,
**dadurch gekennzeichnet,**
**dass** die Betätigungseinheit (22; 22a, 90a) dazu vorgesehen ist, eine Verriegelung nur zu ermöglichen, wenn zumindest ein bestimmter Betriebsparameter vorliegt.

5. Sitzbefestigungsvorrichtung zumindest nach Anspruch 3,
**dadurch gekennzeichnet,**
**dass** die Betätigungseinheit (22; 22a, 90a) zur formschlüssigen Verriegelung vorgesehen ist.

6. Sitzbefestigungsvorrichtung zumindest nach Anspruch 3,
**dadurch gekennzeichnet,**
**dass** die Betätigungseinheit (22; 22a) zur kraftschlüssigen Verriegelung vorgesehen ist.

7. Sitzbefestigungsvorrichtung nach einem der vorhergehenden Ansprüche,
**gekennzeichnet durch**
wenigstens einen Rastmechanismus (24; 24a), der zur Positionierung zumindest eines Befestigungsmittels (12, 14; 12a, 14a) vorgesehen ist.

8. Sitzbefestigungsvorrichtung nach einem der vorhergehenden Ansprüche,
**dadurch gekennzeichnet,**
**dass** die Betätigungseinheit (90a) zumindest teilweise eine Sicherungseinheit zur Sicherung der Betätigungseinheit (22a) in zumindest einer Stellung bildet.

9. Sitzbefestigungsvorrichtung nach Anspruch 8,
**dadurch gekennzeichnet,**
**dass** die Betätigungseinheit (90a) zumindest teilweise einstückig mit einer Signalausgabeeinheit ausgeführt ist.

10. Sitzbefestigungsvorrichtung nach einem der Ansprüche 8 oder 9,
**dadurch gekennzeichnet,**
**dass** die Betätigungseinheit (90a) zumindest einen schwenkbar gelagerten Bügel (92a) aufweist.

## Claims

1. Seat fixing device which is provided for fixing a seat or for lashing loads to a fixing rail (30; 30a) which is fixed to a floor (10) and has passage openings (36; 36a), and which device comprises a basic body (38; 38a) with an integrally formed bearing eye for fixing a seat foot, at least one horizontal fixing means (12, 14; 12a, 14a), at least one vertical fixing means (16, 18, 20; 16a, 18a, 20a), at least one actuating unit (22; 22a, 90a) with a locking screw (50; 50a) and also at least one positioning-assisting unit (26) with an output unit (28) which, once the horizontal fixing means (12, 14; 12a, 14a) are latched into the passage openings (36; 36a), is provided for outputting a signal as an indication to an operator that a proper positioning of the at least one horizontal fixing means (12, 14; 12a, 14a) is present, wherein the function of the actuating unit (22; 22a, 90a) is coupled to at least one operating parameter which is at least dependent on a position variable of one of the horizontal fixing means (12, 14; 12a, 14a), wherein the position variable is implemented as a position of at least one of the horizontal fixing means (12, 14; 12a, 14a), and wherein, when positioning the seat fixing device in the fastening rail (30; 30a), the locking screw (50; 50a) can, only if the horizontal fixing means (12, 14; 12a, 14a) are latched into the passage opening (36; 36a), be screwed with its thread into an internal thread of a threaded region (72; 72a) of the basic body (38; 38a), with the result that the horizontal fixing means (12, 14; 12a, 14a) are secured positively in their locking position.

2. Seat fixing device according to Claim 1, **characterized in that** the output unit (28) is formed by a sheet-metal spring.

3. Seat fixing device according to either of the preceding claims, **characterized in that** the actuating unit (22; 22a, 90a) serves as a locking unit.

4. Seat fixing device according to Claim 3, **characterized in that** the actuating unit (22; 22a, 90a) is provided to allow a locking only if at least a certain operating parameter is present.

5. Seat fixing device at least according to Claim 3, **characterized in that** the actuating unit (22; 22a, 90a) is provided for positive locking.

6. Seat fixing device at least according to Claim 3, **characterized in that** the actuating unit (22; 22a) is provided for force-fit locking.

7. Seat fixing device according to one of the preceding claims, **characterized by** at least one latching mechanism (24; 24a) which is provided for positioning at least one fixing means (12, 14; 12a, 14a).

8. Seat fixing device according to one of the preceding claims, **characterized in that** the actuating unit (90a) at least partially forms a securing unit for securing the actuating unit (22a) in at least one position.

9. Seat fixing device according to Claim 8, **characterized in that** the actuating unit (90a) is at least partially realized in one piece with a signal output unit.

10. Seat fixing device according to either of Claims 8 and 9, **characterized in that** the actuating unit (90a) has at least one pivotably supported clamp (92a).

## Revendications

1. Dispositif de fixation de siège prévu pour la fixation d'un siège ou pour l'arrimage de charges à un rail de fixation (30 ; 30a) fixé à un sol (10), lequel rail présente des ouvertures de passage (36 ; 36a), le dispositif de fixation de siège comprenant un corps de base (38 ; 38a) avec un oeil de palier façonné pour la fixation d'un pied du siège, au moins un moyen de fixation horizontale (12, 14 ; 12a, 14a), au moins un moyen de fixation verticale (16, 18, 20 ; 16a, 18a, 20a), au moins une unité d'actionnement (22 ; 22a, 90a) avec une vis de verrouillage (50 ; 50a) ainsi qu'au moins une unité auxiliaire de positionnement (26) avec une unité d'émission (28) laquelle, si les moyens de fixation horizontale (12, 14 ; 12a, 14a) sont encliquetés dans les ouvertures de passage (36 ; 36a), est prévue pour émettre un signal indiquant à un opérateur un positionnement actuel propre de l'au moins un moyen de fixation horizontale (12, 14 ; 12a, 14a), la fonction de l'unité d'actionnement (22 ; 22a, 90a) étant accouplée à au moins un paramètre d'opèration qui dépend au moins d'une grandeur de position de l'un des moyens de fixation horizontale (12, 14 ; 12a, 14a), la grandeur de position étant implémentée comme une position d'au moins l'un des moyens de fixation horizontale (12, 14 ; 12a, 14a), et la vis de verrouillage (50 ; 50a), lors du positionnement du dispositif de fixation de siège dans le rail de fixation (30 ; 30a), seulement lorsque les moyens de fixation horizontale (12, 14 ; 12a, 14a) sont encliquetés dans les ouvertures de passage (36 ; 36a), pouvant être vissée avec son filetage dans un filetage interne d'une région filetée (72 ; 72a) du corps de base (38 ; 38a), de sorte que les moyens de fixation horizontale (12, 14 ; 12a, 14a) soient fixés par engagement par correspondance de forme dans leur position de verrouillage.

2. Dispositif de fixation de siège selon la revendication 1,
**caractérisé en ce que**
l'unité d'émission (28) est implémentée par un ressort en tôle.

3. Dispositif de fixation de siège selon l'une quelconque des revendications précédentes,
**caractérisé en ce que**
l'unité d'actionnement (22 ; 22a, 90a) sert d'unité de verrouillage.

4. Dispositif de fixation de siège selon la revendication 3,
**caractérisé en ce que**
l'unité d'actionnement (22 ; 22a, 90a) est prévue pour permettre un verrouillage seulement lorsqu'au moins un paramètre de fonctionnement déterminé est présent.

5. Dispositif de fixation de siège selon au moins la revendication 3,
**caractérisé en ce que**
l'unité d'actionnement (22 ; 22a, 90a) est prévue pour une verrouillage par engagement par correspondance de forme.

6. Dispositif de fixation de siège selon au moins la revendication 3,
**caractérisé en ce que**
l'unité d'actionnement (22 ; 22a) est prévue pour le verrouillage par engagement par force.

7. Dispositif de fixation de siège selon l'une quelconque des revendications précédentes,
**caractérisé par**
au moins un mécanisme d'encliquetage (24 ; 24a) qui est prévu pour le positionnement d'au moins un moyen de fixation (12, 14 ; 12a, 14a).

8. Dispositif de fixation de siège selon l'une quelconque des revendications précédentes,
**caractérisé en ce que**
l'unité d'actionnement (90a) forme au moins en partie une unité de fixation pour la fixation de l'unité d'actionnement (22a) dans au moins une position.

9. Dispositif de fixation de siège selon la revendication 8,
**caractérisé en ce que**
l'unité d'actionnement (90a) est réalisée au moins en partie d'une seule pièce avec une unité d'émission de signal.

10. Dispositif de fixation de siège selon l'une quelconque des revendications 8 ou 9,
**caractérisé en ce que**
l'unité d'actionnement (90a) présente au moins un étrier (92a) supporté de manière pivotable.
